# EUROPÄISCHE PATENTSCHRIFT

(11) **EP 1 831 277 B1**
(45) Veröffentlichungstag und Bekanntmachung des Hinweises auf die Patenterteilung: **13.01.2010**
(21) Anmeldenummer: 05814446.0
(22) Anmeldetag: 28.11.2005
(51) Int. Cl.: C08G 18/42, C08G 18/12, C08G 18/76, C09J 175/06

(54) **VERFAHREN ZUR HERSTELLUNG VON REAKTIVEN POLYURETHANZUSAMMENSETZUNGEN**
METHOD FOR PRODUCING REACTIVE POLYURETHANE COMPOSITIONS
PROCEDE POUR PREPARER DES COMPOSITIONS POLYURETHANE REACTIVES

(30) Priorität: 26.11.2004 DE 102004057292
(43) Veröffentlichungstag der Anmeldung: 12.09.2007
(73) Patentinhaber: Klebchemie M.G. Becker GmbH & Co. KG, 76356 Weingarten/Baden (DE)
(72) Erfinder: BECKER-WEIMANN, Klaus, 76227 Karlsruhe (DE); HÖHN, Walter, 75045 Walzbachtal (DE); FAHRLÄNDER, Michael, 76297 Stutensee (DE)
(74) Vertreter: Isenbruck, Günter
(86) Internationale Anmeldenummer: PCT/EP2005/012688
(87) Internationale Veröffentlichungsnummer: WO 2006/056472

(56) Entgegenhaltungen:
- WO-A-03/060033
- DE-A1- 10 150 722
- DE-A1- 10 225 982
- DATABASE WPI Section Ch, Week 199505 Derwent Publications Ltd., London, GB; Class A25, AN 1995-032839 XP002371116 & JP 06 316617 A (NIPPON POLYURETHANE KOGYO KK) 15. November 1994 (1994-11-15)

## Beschreibung

Die Erfindung betrifft ein Verfahren zur Herstellung einer reaktiven Polyurethanzusammensetzung, eine danach hergestellte reaktive Polyurethanzusammensetzung sowie eine Verwendung.

Reaktive Polyurethanzusammensetzungen, die über Luftfeuchtigkeit aushärten, erschließen sich immer neue Anwendungsfelder, besonders im Bereich von Klebstoffen und Beschichtungsmassen. Besonders reaktive Schmelzklebstoffe auf Polyurethanbaisis zeigen dabei ein herausragendes Eigenschaftsprofil. Sie sind bei der Applikationstemperatur zumeist niedrigviskose Flüssigkeiten und bauen beim Abkühlen schnell physikalisch ab, wodurch sehr hohe Anfangsfestigkeiten und damit auch hohe Applikationsgeschwindigkeiten erreicht werden können.

Im Anschluss an das physikalische Abbinden tritt dann die chemische Vernetzung über die Isocyanatgruppen ein, die für die Endfestigkeit der reaktiven Polyurethanklebstoffe sorgt. Reaktive einkomponentige Polyurethanzusammensetzungen haben aber neben dem herausragenden Eigenschaftsprofil arbeitshygienische Nachteile, da sie Reste an monomeren Isocyanaten enthalten. Diese sind Risikostoffe und die Polyurethanzusammensetzungen müssen deshalb bei einem Gehalt > 0,1 Gew.-%, bezogen auf das Gesamtgewicht der Zusammensetzung, als Gefahrstoff gekennzeichnet werden.

Es wurden daher eine Vielzahl von Verfahren entwickelt, um Polyurethanzusammensetzungen mit niedrigen Restgehalten an monomeren Diisocyanaten zur Verfügung zu stellen, die nicht kennzeichnungspflichtig sind.

Die DE-A 102 25 982 beschreibt ein Verfahren zur Herstellung einer Polyurethanzusammensetzung mit geringem Anteil an Diisocyanatmonomeren durch Umsetzung mindestens eines isocyanatreaktiven Polymers mit mindestens einem isocyanatterminierten Prepolymer in Überschuss gegenüber dem isocyanatreaktiven Polymer, das im Wesentlichen frei von Diisocyanatmonomeren ist. Die erhaltene Polyurethanzusammensetzung enthält weniger als 0,1 Gew.-% monomeres Diisocyanat und ist somit nicht kennzeichnungspflichtig. Die kommerziell zur Verfügung stehenden entmonomerisierten Prepolymere haben meist jedoch Gehalte an reaktiven Isocyanatgruppen unter 10 Gew.-%, bezogen auf das Gesamtgewicht des Prepolymers. Dadurch sind zur Herstellung von feuchtigkeitsreaktiven Schmelzklebstoffen große Mengen dieser Prepolymere notwendig. Da die Prepolymere aber bei Raumtempeatur flüssig sind, weisen die damit hergestellten Schmelzklebstoffe geringere Anfangsfestigkeiten als die nichtmonomerarmen Varianten auf.

Andere Verfahren zur Herstellung von monomerarmen reaktiven Polyurethanzusammensetzungen nutzen die unterschiedliche Reaktivität der Isocyanatgruppen von unsymmetrischen Diisocyanaten, insbesondere 2,4'-Diphenylmethandiisocyanat. Dabei wird ausgenutzt, dass die para-ständige Isocyanatgruppe aus sterischen Gründen deutlich schneller mit Hydroxyfunktionalitäten reagiert als die ortho-ständige Isocyanatgruppe. Derartige Umsetzungsprodukte sind beispielsweise in DE-A 101 50 722 beschrieben. Die Umsetzungsprodukte werden aus 2,4'-Diphenylmethandiisocyanat mit mindestens einem Polyetherpolyol und/oder Polyalkylendiol mit einem Molekulargewicht unter 1000 und/oder einem kristallinen, teilkristallinen oder glasartig amorphen Polyesterpolyol erhalten und weisen einen Restgehalt an monomerem Diisocyanat von weniger als 0,5, vorzugsweise von weniger als 0,25 Gew.-% sowie eine hohe Schmelzstabilität und eine niedrige Viskosität auf. Das Verfahren kann jedoch nicht einen noch geringeren Restgehalt an monomerem Diisocyanat, von < 0,1 Gew.-%, wie er für ein nicht kennzeichnungspflichtiges Produkt erforderlich wäre, sicher gewährleisten. Darüber hinaus weisen die erhaltenen Polyurethanzusammensetzungen beim Einsatz als Schmelzklebstoffe den Nachteil schlechter Benetzungseigenschaften für das zu verklebende Substrat auf.

Im Verfahren der DE-C 102 15 641 wird in einem ersten Verfahrensschritt mindestens ein isocyanatreaktives Polymer mit mindestens einem monomeren Diisocyanat umgesetzt und anschließend in einem zweiten Verfahrensschritt die Umsetzungsprodukte aus dem ersten Verfahrensschritt mit einem isocyanatterminierten Prepolymer vermischt. Die erhaltenen Polymerzusammensetzungen weisen eine bessere Benetzbarkeit auf sowie einen geringeren Restgehalt an monomerem Diisocyanat. Auch bei diesem Verfahren ist nicht sicher gewährleistet, dass die so hergestellten reaktiven Polyurethanzusammensetzungen einen Restmonomergehalt von < als 0,1 Gew.-%, bezogen auf die Gesamtzusammensetzung, aufweisen.

Es war demgegenüber Aufgabe der Erfindung, ein Verfahren zur Herstellung von reaktiven Polyurethanzusammensetzungen zur Verfügung zu stellen, die nicht kennzeichnungspflichtig sind und maßgeschneiderte Eigenschaften für den Einsatz als einkomponentige Schmelzklebstoffe oder Beschichtungsmassen aufweisen, insbesondere vergleichbar hohe Anfangsfestigkeiten wie nicht-monomerreduzierte Schmelzklebstoffe.

Die Lösung besteht in einem Verfahren zur Herstellung einer reaktiven Polyurethanzusammensetzung, das dadurch gekennzeichnet ist, dass
- in einer ersten Verfahrensstufe aus einem isocyanatreaktiven Polymer oder einer Mischung von isocyanatreaktiven Polymeren mit einem Anteil von mindestens 90 Gew.-%, bevorzugt mindestens 95 Gew.-%, besonders bevorzugt mindestens 99 Gew.-% linearen Molekülen durch Umsetzung mit einem Polyisocyanat mit einem Molekulargewicht < 500 in einem molaren Unterschuss der Isocyanatgruppen des Polyisocyanats gegenüber den isocyanatreaktiven Endgruppen des Polymers oder der Mischung von Polymeren ein monomerfreies thermoplastisches Polyurethan mit isocyanatreaktiven Endgruppen hergestellt wird, das
- in einer zweiten Verfahrensstufe mit einem monomerarmen isocyanat-endständigen Prepolymer mit einem Restmonomergehalt von nicht größer als 0,5 Gew.-% in einem Molverhältnis der isocyanatreaktiven Endgruppen des thermoplastischen Polyurethans zu den Isocyanatgruppen des Prepolymers von 1 : 1,1 bis 1 : 5 zur reaktiven Polyurethanzusammensetzung umgesetzt wird.

Im ersten Verfahrensschritt wird ein isocyanatreaktives Polymer oder eine Mischung von isocyanatreaktiven Polymeren, mit einem Anteil von mindestens 90 Gew.-%, bevorzugt von mindestens 95 Gew.-%, besonders bevorzugt von mindestens 99 Gew.-% linearen Molekülen eingesetzt. Hierbei können die Endgruppen des Polymers oder der Gemische bildenden Polymere, bevorzugt Hydroxylgruppen, Aminogruppen, Carboxygruppen, Carbonsäureanhydridgruppen und/oder Mercaptogruppen sein.

Bevorzugte isocyanatreaktive Polymere sind überwiegend lineare aber auch verzweigte Polyester insbesondere di- aber auch trifunktionelle Polyethylen- und Polypropylenglykole, Polytetrahydrofurane sowie Polyamide und Mischungen daraus. Dabei können auch die entsprechenden Copolymere, insbesondere Blockcopolymere, eingesetzt werden.

Besonders bevorzugt sind Polyesterpolyole, die flüssig, glasartig amorph oder kristallin sein können und ein zahlenmittleres Molekulargewicht zwischen 400 und 25000 g/mol, insbesondere zwischen 1000 und 10000 g/mol, besonders bevorzugt zwischen 2000 und 6000 g/mol, aufweisen. Derartige besonders geeignete Polyesterpolyole sind beispielsweise unter der Bezeichnung Dynacoll® der Degussa AG als Handelsprodukte erhältlich. Weitere geeignete Polyesterpolyole sind Polycaprolactonpolyester, Polycarbonatpolyester sowie Polyesterpolyole auf der Basis von Fettsäuren.

Weitere bevorzugte isocyanatreaktive Polymere sind überwiegend lineare oder leicht verzweigte Polyalkylenoxide, insbesondere Polyethylenoxide, Polypropylenoxide oder Polytetrahydrofurane (Polyoxytetramethylenoxide), mit einem zahlenmittleren Molekulargewicht zwischen 250 und 12000 g/mol, bevorzugt mit einem zahlenmittleren Molekulargewicht zwischen 500 und 4000 g/mol.

Die Erfinder haben erkannt, dass es wesentlich ist, in der ersten Verfahrensstufe das Polyisocyanat in einem molaren Unterschuss der Isocyanatgruppen derselben gegenüber den isocyanatreaktiven Endgruppen des Polymers einzusetzen. Bevorzugt ist ein Verhältnis der isocyanatreaktiven Endgruppen des Polymers oder der Mischung von Polymeren zu den Isocyanatgruppen des Polyisocyanats im Bereich von 1,1 : 1 bis 5 : 1. Besonders bevorzugt ist das genannte molare Verhältnis deutlich größer als 1, insbesondere im Bereich zwischen 2 : 1 und 3 : 1.

Das isocyanatreaktive Polymer, das auch eine Mischung sein kann, wird in der ersten Verfahrensstufe mit einem Polyisocyanat mit einem Molekulargewicht < 500 umgesetzt.

Das Polyisocyanat ist bevorzugt eine Substanz oder eine Mischung von Substanzen, ausgewählt aus aromatischen, aliphatischen oder cycloaliphatischen Polyisocyanaten mit einer Isocyanatfunktionalität zwischen 1 und 3, bevorzugt zwischen 1,8 und 2,2, besonders bevorzugt mit der Isocyanatfunktionalität 2.

Besonders bevorzugt ist das Polyisocyanat mit einer Molekularmasse < 500 eine Substanz oder eine Mischung von Substanzen aus der nachfolgenden Aufzählung: Diisocyanatodiphenylmethane (MDIs), insbesondere 4,4'-Diisocyanatodiphenylmethan und 2,4'-Diisocyanatodiphenylmethan sowie Mischungen verschiedener Diisocyanatodiphenylmethane; hydriertes 4,4'-MDI (bis 4-isocyanatocyclohexyl)methan und hydriertes 2,4'-MDI Tetramethylxylylendiisocyanat (TMXDI); Xylylendiisocyanat (XDI); 1,5-Diisocyanatonaphthalin (NDI); Düsocyanattoluole (TDls), insbesondere 2,4-Diisocyanatotoluol, sowie TDI-Urethdione, insbesondere dimerem 1-Methyl-2,4-phenylen-diisocyanat (TDI-U), und TDI-Hamstoffe; 1-Isocyanato-3-isocyanatomethyl-3,5,5-trimethylcyclohexan (IPDI) und dessen Isomere und Derivate, insbesondere Di-, Tri- und Polymerisate, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); Hexamethylen-1,6-diisocyanat (HDI). Besonders vorteilhaft ist das Polyisocyanat 2,4'-Diphenylmethandiisocyanat (2,4'-MDI) mit einem maximalen Anteil aus der Summe an 2,2'- und 4,4'-Isomeren von 2,5 Gew.-%, bezogen auf das Gesamtgewicht des Polyisocyanats.

In der ersten Verfahrensstufe wird als Zwischenprodukt ein monomerfreies thermoplastisches Polyurethan mit isocyanatreaktiven Gruppen erhalten, das auch als ein Prepolymer mit freien isocyanatreaktiven Gruppen bezeichnet werden kann.

Das im ersten Verfahrensschritt erhaltene thermoplastische Polyurethan wird in einer zweiten Verfahrensstufe mit einem isocyanatendständigen Prepolymer im Überschuss, d.h. in einem molaren Verhältnis der reaktiven Endgruppen des thermoplastischen Polyurethans zu den Isocyanatgruppen des Prepolymers von 1 : 1,1 bis 1,5 zum Endprodukt, der reaktiven Polyurethanzusammensetzung, umgesetzt.

Der Isocyanatüberschuss muss dabei so gewählt werden, dass die resultierende, reaktive Polyurethanzusammensetzung, einen Isocyanatgehalt von mindestens 0,5 %, bevorzugt aber mindestens 1 Gew.-%, bezogen auf die Gesamtzusammensetzung enthält. Das molare Verhältnis der Isocyanat-Funktionalitäten zu den isocyanatreaktiven Gruppen kann aber auch nicht beliebig erhöht werden, da ansonsten die Anfangsfestigkeit der reaktiven Polyurethanzusammensetzung zu gering wird. In der Praxis hat sich ein Verhältnis von 2 bis 3 besonders bewährt.

Die Erfindung ist nicht eingeschränkt bezüglich der einsetzbaren isocyanatterminierten Prepolymere, vorausgesetzt sie sind monomerarm, d.h. ihr Restmonomergehalt ist nicht größer als 0,5 Gew.-%, bevorzugt kleiner als 0,3 Gew.-%, besonders bevorzugt kleiner als 0,1 Gew.-%. Geeignet sind insbesondere Umsetzungsprodukte von Polyethern, bevorzugt von Polypropylenglykolen mit Polyisocyanaten, insbesondere Diisocyanato-diphenylmethanen, Diisocyanatotoluolen, Diisocyanato-hexan und/oder Isocyanato-3-isocyanatomethyl-3,5,5-trimethyl-cyclohexan (IPDI).

Solche monomerarmen, isocyanatterminierten Prepolymere werden durch Umsetzung von Polyetherpolyolen mit einem Überschuss an Polyisocyanaten hergestellt. Nach der Umsetzung wird das noch vorhandene monomere Isocyanat mittels Dünnschichtverdampfer entfernt. Diese monomerarmen Prepolymere stehen kommerziell zur Verfügung und werden zum Beispiel von Dow Chemicals unter der Bezeichnung Vorastar® vertrieben.

Die Umsetzung in den Verfahrensstufen 1 und/oder 2 wird bevorzugt bei einer Temperatur im Bereich von 80 bis 140°C, insbesondere von 100 bis 120°C, durchgeführt.

In einer vorteilhaften Verfahrensweise wird zur Herstellung des thermoplastischen Polyurethans in der ersten Verfahrensstufe das isocyanatreaktive Polymer oder die Mischung der isocyanatreaktiven Polymere bei 120°C unter Vakuum von Wasser befreit. Danach wird bei 80 bis 140°C, bevorzugt bei 100 bis 120°C, mit dem Polyisocyanat umgesetzt.

Das so hergestellte thermoplastische Polyurethan kann in dieser Form isoliert werden und später im zweiten Verfahrensschritt mit einer weiteren Polyisocyanatkomponente, insbesondere einem entmonomerisierten Präpolymer, umgesetzt werden.

Bevorzugt ist aber, den zweiten Verfahrensschritt unmittelbar im Anschluss an den ersten Verfahrensschritt in demselben Reaktor durchzuführen. Hierzu wird das monomerarme Prepolymer zu dem im ersten Verfahrensschritt hergestellten thermoplastischen Polyurethan zugegeben und bei 80 bis 140°C, bevorzugt bei 100 bis 120°C, umgesetzt.

Die so hergestellte reaktive Polyurethanzusammensetzung wird anschließend bevorzugt in wasserdampfundurchlässige Gebinde abgefüllt.

Gegenstand der Erfindung ist auch eine reaktive Polyurethanzusammensetzung, erhältlich nach dem oben beschriebenen Verfahren.

Insbesondere kann die reaktive Polyurethanzusammensetzung auch nicht reaktive Polymere, klebrigmachende Harze, Wachse, Weichmacher, Füllstoffe, Additive, Beschleuniger, Haftvermittler, Pigmente, Katalysatoren, Stabilisatoren und/oder Lösungsmittel enthalten.

Die nicht-reaktiven Polymere können bevorzugt Polyolefine, Polyacrylate, und Polymere auf Basis Ethylen und Vinylacetat mit Vinylacetat-Gehalten von 0 bis 80 Gew.-% oder Polyacrylate sowie Mischungen hiervon sein.

Die nicht-reaktiven Komponenten werden bevorzugt zu Beginn der Herstellung der reaktiven Polyurethanzusammensetzung zugegeben, können aber auch nach der zweiten Verfahrensstufe zugegeben werden.

Die erfindungsgemäßen reaktiven Polyurethanzusammensetzungen eignen sich insbesondere zur Verwendung als einkomponentiger reaktiver Klebstoff oder als Beschichtungsmasse.

Die Erfindung wird im Folgenden anhand von Ausführungsbeispielen näher erläutert.

Ausgehend von jeweils derselben Mischung von Polyesterpolyolen wurden reaktive Polyurethan-Zusammensetzungen mit einem Isocyanatrestgehalt von jeweils ca. 1,4 %, einsetzbar als einkomponentige reaktive Klebstoffe hergestellt.

Die Polyesterpolyol-Mischung wurde jeweils wie folgt hergestellt:
Es wurden 25 Gewichtsteile Polyesterpolyol Dynacoll® 7130 der Firma Degussa AG, 25 Gewichtsteile Polyesterpolyol Dynacoll® 7250 der Firma Degussa AG, 25 Gewichtsteile Polyesterpolyol Dynacoll® 7380 der Firma Degussa AG und 0,2 Gewichtsteile Aminbeschleuniger Jeffcat® DMDLS der Firma Huntsmann in einem Glasgefäß mit Flügelrührer vorgerührt und 60 Minuten lang bei 130°C entwässert.

### Vergleichsbeispiel 1

In einem ersten Vergleichsbeispiel wurde ausgehend von obiger Polyesterpolyol-Mischung nicht-monomerarme Polyruethan-Heißschmelzklebstoff hergestellt, indem zur genannten Polyesterpolyol-Mischung 12,5 Teile 4,4'-MDI (Desmodur® 44 M der Firma Bayer AG), das heißt ein Isocyanat in molarem Überschuss der NCO-Gruppen bezogen auf die OH-Gruppen der Polyesterpolyol-Mischung und eine Stunde lang bei 120°C gerührt.

### Vergleichsbeispiel 2

Ausgehend von derselben Polyesterpolyol-Mischung wurde ein monomerarmer Polyurethan-Heißschmelzklebstoff nach dem Stand der Technik hergestellt, indem 59 Teile entmonomerisiertes Präpolymer auf TDI-Basis Vorastar® LM1002 der Firma Dow Chemicals, enthaltend NCO-Gruppen in molarem Überschuss bezogen auf die OH-Gruppen der Polyesterpolyol-Mischung zugegeben und eine Stunde lang bei 120°C gerührt wurde.

### Beispiel 1

Ausgehend von derselben Polyesterpolyol-Mischung wurde ein erfindungsgemäßer monomerarmer Polyurethan-Heißschmelzklebstoff hergestellt, indem zunächst in einer ersten Verfahrensstufe ein monomerfreies thermoplastisches Polyurethan mit isocyanatreaktiven Gruppen gebildet wurde durch Zugabe von 3 Gewichtsteilen 2,4'-MDI Lupranat® MCI und einstündiges Rühren bei 120°C. Dieses monomerarme thermoplastische Polyurethan wurde in einer zweiten Verfahrensstufe mit 44 Gewichtsteilen eines entmonomerisierten Präpolymers auf TDI-Basis Vorastar® LM1002 der Firma Dow Chemicals eine Stunde lange bei 120°C umgesetzt.

### Beispiel 2

Ausgehend von derselben Polyesterpolyol-Mischung wurde ein weiterer erfindungsgemäßer monomerarmer Polyurethan-Heißschmelzklebstoff hergestellt indem in einer ersten Verfahrensstufe ein monomerfreies thermoplastisches Polyurethan mit isocyanatreaktiven Gruppen durch Zugabe von 3 Gewichtsteilen 4,4'-MDI Desmodur® 44 M der Firma Bayer AG zugegeben und eine Stunde lang bei 120°C gerührt wurde. In einer zweiten Verfahrensstufe wurde mit 44 Gewichtsteilen entmonomerisiertem Präpolymer auf TDI-Basis Vorastar® LM1002 der Firma Dow Chemicals eine Stunde lang bei 120°C umgesetzt.

Die nach den Vergleichsbeispielen 1 und 2 und den Beispielen 1 und 2 hergestellten Polyurethan-Heißschmelzklebstoffe wurden jeweils in wasserdichte Gebinde abgefüllt, und jeweils die Viskosität, Anfangsfestigkeit und der Restmonomergehalt bestimmt.

Die Schmelzviskosität wurde mit einem kalibrierten Viskosimeter HB DV2 der Firma Brookfield mit einer Spindel 27 und einer Umdrehungszahl von 10 U/min bestimmt.

Die Bestimmung der Festigkeit wurde über eine Zugscherprüfung in Anlehnung an DIN 53283 durchgeführt. Hierfür wurden Buche-Prüfkörper mit den Abmessungen 100 mm x 20 mm x 2 mm überlappend verklebt (Klebefläche 20 mm x 20 mm) und in den in der nachfolgenden Tabelle angegebenen Zeitabständen mittels einer kalibrierten Zugprüfmaschine der Firma Frank geprüft. Die angegebenen Messwerte sind jeweils das Mittel von fünf Messungen.

Der Restmonomergehalt wurde nach Derivatisierung der Proben mittels HPLC (UV-Detektion) bestimmt.

Der in der nachfolgenden Tabelle angegebene NCO-Gehalt der Schmelzklebstoffe wurde rechnerisch ermittelt.

**Tabelle:**

| | Vergleichsbeispiel 1 | Vergleichsbeispiel 2 | Beispiel 1 (erf.-gemäß) | Beispiel 2 (erf.-gemäß) |
|---|---|---|---|---|
| Viskosität [mPas] | | | | |
| 120°C | 15.400 | 39.200 | 20.800 | 48.000 |
| 140°C | 9.600 | 20.800 | 13.600 | 25.000 |
| NCO-Cehalt [%] | 1,43 | 1,39 | 1,37 | 1,35 |
| Festigkeit [N/cm²] | | | | |
| 30 sec | 34 | 3 | 15 | 14 |
| 1 min | 51 | 9 | 18 | 16 |
| 5 min | 124 | 19 | 31 | 28 |
| Restmonomergehalt [%] | 1,11 | < 0,1 | < 0,1 | < 0,1 |

Die in der Tabelle dargestellten Messergebnisse zeigen, dass durch das erfindungsgemäße Verfahren ein monomerarmer Heiß-Schmelzklebstoff erhalten werden kann, der verbesserte Anfangsfestigkeiten gegenüber bekannten monomerarmen Heiß-Schmelzklebstoffen (Vergleichsversuch 2) aufweist und eine geringere Absenkung der Anfangsfestigkeit gegenüber bekannten nichtmonomerarmen Heiß-Schmelzklebstoffen (Vergleichsversuch 1).

## Patentansprüche

1. Verfahren zur Herstellung einer reaktiven Polyurethanzusammensetzung, **dadurch gekennzeichnet, dass**
- in einer ersten Verfahrensstufe aus einem isocyanatreaktiven Polymer oder einer Mischung von isocyanatreaktiven Polymeren mit einem Anteil von mindestens 90 Gew.-%, bevorzugt mindestens 95 Gew.-%, besonders bevorzugt mindestens 99 Gew.-% linearen Molekülen durch Umsetzung mit einem Polyisocyanat mit einem Molekulargewicht < 500 in einem molaren Unterschuss der Isocyanatgruppen des Polyisocyanats gegenüber den isocyanatreativen Endgruppen des Polymers oder der Mischung von Polymeren ein monomerfreies thermoplastisches Polyurethan mit isocyanatreaktiven Gruppen hergestellt wird, das
- in einer zweiten Verfahrensstufe mit einem monomerarmen isocyanat-endständigen Prepolymer mit einem Restmonomergehalt von nicht grösser als 0,5 Gew.-% in einem Molverhältnis der isocyanatreaktiven Endgruppen des thermoplastischen Polyurethans zu den Isocyanatgruppen des Prepolymers von 1 : 1,1 bis 1 : 5 zur reaktiven Polyurethanzusammensetzung umgesetzt wird.

2. Verfahren nach Anspruch 1, **gekennzeichnet durch** ein Molverhältnis der isocyanatreaktiven Endgruppen des Polymers oder der Mischung von Polymeren zu den Isocyanatgruppen des Polyisocyanats in der ersten Verfahrensstufe von 1,1 : 1 bis 5 : 1.

3. Verfahren nach Anspruch 1 oder 2, **dadurch gekennzeichnet, dass** das Molverhältnis der isocyanatreaktiven Endgruppen des Polymers oder der Mischung von Polymeren zu den Isocyanatgruppen des Polyisocyanats in der ersten Verfahrensstufe und/oder dass das Molverhältnis des Isocyanatgruppen des Prepolymers zu den isocyanatreaktiven Endgruppen des thermoplastischen Polyurethans in der zweiten Verfahrensstufe im Bereich von 2 : 1 bis 3 : 1, liegt.

4. Verfahren nach einem der Ansprüche 1 bis 3, **dadurch gekennzeichnet, dass** die Endgruppen des weitgehend linearen Polymers Hydroxylgruppen, Aminogruppen, Carboxylgruppen, Carbonsäureanhydridgruppen und/oder Mercaptogruppen sind.

5. Verfahren nach einem der Ansprüche 1 bis 4, **dadurch gekennzeichnet, dass** das isocyanatreaktive Polymer oder die Mischung von isocyanatreaktiven Polymeren eine oder mehrere Substanzen, ausgewählt aus der nachfolgenden Aufzählung, ist: Polyester, di- oder trifunktionelle Polyethylen- oder Polypropylenglykole, Polytetrahydrofurane und Polyamide, sowie Copolymere und Blockcopolymere hiervon.

6. Verfahren nach einem der Ansprüche 1 bis 5, **dadurch gekennzeichnet, dass** als isocyanatreaktive Polymere Polyesterpolyole mit einem zahlenmittleren Molekulargewicht zwischen 400 und 25000 g/mol, bevorzugt zwischen 1000 und 10000 g/mol, besonders bevorzugt zwischen 2000 und 6000 g/mol und/oder Polyalkylenoxide mit einem zahlenmittleren Molekulargewicht zwischen 250 und 12000 g/mol, bevorzugt zwischen 500 und 4000 g/mol eingesetzt werden.

7. Verfahren nach einem der Ansprüche 1 bis 4, **dadurch gekennzeichnet, dass** das Polyisocyanat mit einem Molekulargewicht < 500 eine Substanz oder eine Mischung von Substanzen ist, ausgewählt aus aromatischen, aliphatischen oder cycloaliphatischen Polyisocyanaten mit einer Isocyanatfunktionalität zwischen 1 und 3, bevorzugt mit einer Isocyanatfunktionalität von 1,8 bis 2,2, besonders bevorzugt mit der Isocyanatfunktionalität 2.

8. Verfahren nach Anspruch 7, **dadurch gekennzeichnet, dass** das Polyisocyanat mit einer Molekularmasse < 500 ausgewählt ist aus der Gruppe von Diisocyanatodiphenylmethanen (MDIs), insbesondere 4,4'-Diisocyanatodiphenylmethan und 2,4'-Diisocyanatodiphenylmethan sowie Mischungen verschiedener Diisocyanatodiphenylmethane; hydriertes 4,4'-MDI (bis 4-isocyanatocyclohexyl)methan und hydriertes 2,4'-MDI; Tetramethylxylylendiisocyanat (TMXDI); Xylylendiisocyanat (XDI); 1,5-Diisocyanatonaphthalin (NDI); Diisocyanatotoluole (TDIs), insbesondere 2,4-Diisocyanatotoluol, sowie TDI-Uretdion, insbesondere dimeren 1-Methyl-2,4-phenylen-diisocyanat (TDI-U), und TDI-Hamstoffe; 1-Isocyanato-3-isodyanatomethyl-3,5,5-trimethylcyclohexan (IPDI) und dessen Isomere und Derivate, insbesondere Di-, Tri- und Polymerisate, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); Hexamethylen-1,6-diisocyanat (HDI).

9. Verfahren nach Anspruch 8, **dadurch gekennzeichnet, dass** das Polyisocyanat 2,4'-Diisocyanatodiphenylmethan (2,4'-MDI) mit einem maximalen Anteil aus der Summe an 2,2'- Diisocyanatodiphenylmethan (2,2'-MDI) und 4,4'- Diisocyanatodiphenylmethan (4,4'-MDI) von 2,5 Gew.-%, bezogen auf das Gesamtgewicht des Polyisocyanats, ist.

10. Verfahren nach einem der Ansprüche 1 bis 9, **dadurch gekennzeichnet, dass** das monomerreduzierte isocyanat-terminierte Prepolymer für den Einsatz in der zweiten Verfahrensstufe eine oder mehrere Substanzen, ausgewählt aus den Umsetzungsprodukten von Polyethern, insbesondere Polypropylenglykolen mit Polyisocyanaten, insbesondere Diisocyanatodiphenylmethane (MDI), Diisocyanato-toluole (TDI), Diisocyanato-hexan (HDI) und/oder Isocyanato-3-isocyanatomethyl-3,5,5-trimethyl-cyclohexan (IPDI) enthält.

11. Verfahren nach einem der Ansprüche 1 bis 10, **dadurch gekennzeichnet, dass** die erste und/oder zweite Verfahrensstufe bei einer Temperatur im Bereich von 80 bis 140 °C, bevorzugt von 100 bis 120 °C, durchgeführt wird.

12. Reaktive Polyurethanzusammensetzung, erhältlich nach einem Verfahren nach einem der Ansprüche 1 bis 11.

13. Reaktive Polyurethanzusammensetzung nach Anspruch 12, **dadurch gekennzeichnet, dass** die Polyurethanzusammensetzung nicht-reaktive Komponenten enthält, die insbesondere ausgewählt sind aus der Gruppe von nicht-reaktiven Polymeren, klebrigmachenden Harzen, Wachsen, Füllstoffen, Weichmachern, Additiven, Haftvermittler, Pigmente, Katalysatoren, Stabilisatoren und/oder Lösungsmitteln.

14. Reaktive Polyurethanzusammensetzung nach Anspruch 13, **dadurch gekennzeichnet, dass** die nicht-reaktiven Polymere aus der nachstehenden Gruppe ausgewählt sind: Polyolefine, Polyacrylate oder Polymere auf Basis von Ethylen und Vinylacetat.

15. Verwendung einer reaktiven Polyurethanzusammensetzung nach Anspruch 14 als einkomponentiger reaktiver Klebstoff oder als Beschichtungsmasse.

## Claims

1. Process for preparing a reactive polyurethane composition, **characterized in that**
- in a first process stage, from an isocyanate-reactive polymer or mixture of isocyanate-reactive polymers with a fraction of at least 90%, preferably at least 95%, more preferably at least 99% by weight of linear molecules, by reaction with a polyisocyanate having a molecular weight < 500, in a molar deficit of the isocyanate groups of the polyisocyanate relative to the isocyanate-reactive end groups of the polymer or mixture of polymers, a monomer-free thermoplastic polyurethane is prepared which contains isocyanate-reactive groups and which
- in a second process stage is reacted with a low-monomer-content, isocyanate-terminal prepolymer having a residual monomer content of at most 0.5% by weight, in a molar ratio of the isocyanate-reactive end groups of the thermoplastic polyurethane to the isocyanate groups of the prepolymer of 1:1.1 to 1:5, to give the reactive polyurethane composition.

2. Process according to Claim 1, **characterized by** a molar ratio of the isocyanate-reactive end groups of the polymer or mixture of polymers to the isocyanate groups of the polyisocyanate in the first process stage of 1.1:1 to 5:1.

3. Process according to Claim 1 or 2, **characterized in that** the molar ratio of the isocyanate-reactive end groups of the polymer or mixture of polymers to the isocyanate groups of the polyisocyanate in the first process stage and/or **in that** the molar ratio of the isocyanate groups of the prepolymer to the isocyanate-reactive end groups of the thermoplastic polyurethane in the second process stage is in the range from 2:1 to 3:1.

4. Process according to one of Claims 1 to 3, **characterized in that** the end groups of the largely linear polymer are hydroxyl groups, amino groups, carboxyl groups, carboxylic anhydride groups and/or mercapto groups.

5. Process according to one of Claims 1 to 4, **characterized in that** the isocyanate-reactive polymer or mixture of isocyanate-reactive polymers is one or more substances selected from the following enumeration: polyesters, di- or trifunctional polyethylene or polypropylene glycols, polytetrahydrofurans and polyamides, and also copolymers and block copolymers thereof.

6. Process according to one of Claims 1 to 5, **characterized in that** isocyanate-reactive polymers used are polyester polyols having a number-average molecular weight of between 400 and 25 000 g/mol, preferably between 1000 and 10 000 g/mol, more preferably between 2000 and 6000 g/mol and/or polyalkylene oxides having a number-average molecular weight of between 250 and 12 000 g/mol, preferably between 500 and 4000 g/mol.

7. Process according to one of Claims 1 to 4, **characterized in that** the polyisocyanate having a molecular weight < 500 is a substance or mixture of substances selected from aromatic, aliphatic or cycloaliphatic polyisocyanates having an isocyanate functionality of between 1 and 3, preferably having an isocyanate functionality of 1.8 to 2.2, more preferably having an isocyanate functionality of 2.

8. Process according to Claim 7, **characterized in that** the polyisocyanate having a molecular mass < 500 is selected from the group of diisocyanatodiphenylmethanes (MDIs), particularly 4,4'-diisocyanatodiphenylmethane and 2,4'-diisocyanatodiphenylmethane, and mixtures of different diisocyanatodiphenylmethanes; hydrogenated 4,4'-MDI [bis (4-isocyanatocyclohexyl)methane] and hydrogenated 2,4'-MDI; tetramethylxylylene diisocyanate (TMXDI); xylylene diisocyanate (XDI); 1,5-diisocyanatonaphthalene (NDI); diisocyanatotoluenes (TDIs), especially 2,4-diisocyanatotoluene, and also TDI uretdione, especially dimeric 1-methyl-2,4-phenylene diisocyanate (TDI-U), and TDI ureas; 1-isocyanato-3-isocyanatomethyl-3,5,5-trimethylcyclohexane (IPDI) and its isomers and derivatives, especially dimers, trimers and polymers, and also IPDI isocyanurate (IPDI-T); 3,3'-dimethylbiphenyl-4,4'-diisocyanate (TODI); 3,3'-diisocyanato-4,4'-dimethyl-N,N'-diphenylurea (TDIH); hexamethylene 1,6-diisocyanate (HDI).

9. Process according to Claim 8, **characterized in that** the polyisocyanate is 2,4'-diisocyanatodiphenylmethane (2,4'-MDI) having a maximum fraction of the sum of 2,2'-diisocyanatodiphenylmethane (2,2'-MDI) and 4,4'-diisocyanatodiphenylmethane (4,4'-MDI) of 2.5% by weight, based on the total weight of the polyisocyanate.

10. Process according to one of Claims 1 to 9, **characterized in that** the monomer-reduced isocyanate-terminated prepolymer for use in the second process stage comprises one or more substances selected from the reaction products of polyethers, especially polypropylene glycols, with polyisocyanates, especially diisocyanatodiphenylmethanes (MDI), diisocyanatotoluenes (TDI), diisocyanatohexane (HDI) and/or isocyanato-3-isocyanatomethyl-3,5,5-trimethylcyclohexane (IPDI).

11. Process according to one of Claims 1 to 10, **characterized in that** the first and/or the second process stage is carried out at a temperature in the range from 80 to 140°C, preferably from 100 to 120°C.

12. Reactive polyurethane composition obtainable by a process according to one of Claims 1 to 11.

13. Reactive polyurethane composition according to Claim 12, **characterized in that** the polyurethane composition comprises non-reactive components selected in particular from the group of non-reactive polymers, tackifying resins, waxes, fillers, plasticizers, additives, adhesion promoters, pigments, catalysts, stabilizers and/or solvents.

14. Reactive polyurethane composition according to Claim 13, **characterized in that** the non-reactive polymers are selected from the following group: polyolefins, polyacrylates or polymers based on ethylene and vinyl acetate.

15. Use of a reactive polyurethane composition according to Claim 14 as a one-component reactive adhesive or as a coating material.

## Revendications

1. Procédé pour la préparation d'une composition de polyuréthane réactive, **caractérisé en ce que**
- dans une première étape de réaction on prépare, à partir d'un polymère réactif avec un isocyanate ou d'un mélange de polymères réactifs avec des isocyanates, ayant une proportion d'au moins 90 % en poids, de préférence d'au moins 95 % en poids, de façon particulièrement préférée, d'au moins 99 % en poids, de molécules linéaires, par mise en réaction avec un polyisocyanate ayant une masse moléculaire < 500, en une proportion molaire insuffisante des groupes isocyanate du polyisocyanate par rapport aux groupes terminaux, réactifs avec des isocyanates, du polymère ou du mélange de polymères, on prépare un polyuréthane thermoplastique à groupes réactifs avec des isocyanates, exempt de monomères, qui
- dans une deuxième étape de réaction, est mis en réaction avec un prépolymère pauvre en monomères, ayant une teneur en monomères résiduels n'excédant pas 0,5 % en poids, à groupes isocyanate en bout de chaîne, en un rapport molaire des groupes terminaux réactifs avec des isocyanates du polyuréthane thermoplastique aux groupes isocyanate du prépolymère de 1:1 à 1:5, pour donner la composition de polyuréthane réactive.

2. Procédé selon la revendication 1, **caractérisé par** un rapport molaire des groupes terminaux, réactifs avec des isocyanates, du polymère ou du mélange de polymères, aux groupes isocyanate du polyisocyanate dans la première étape du procédé, de 1,1:1 à 5:1.

3. Procédé selon la revendication 1 ou 2, **caractérisé en ce que** le rapport molaire des groupes terminaux, réactifs avec des isocyanates, du polymère ou du mélange de polymères, aux groupes isocyanate du polyisocyanate dans la première étape du procédé et/ou en ce que le rapport molaire des groupes isocyanate du prépolymère aux groupes terminaux réactifs avec des isocyanates du polyuréthane thermoplastique dans la deuxième étape du procédé se situe dans la plage de 2:1 à 3:1.

4. Procédé selon l'une quelconque des revendications 1 à 3, **caractérisé en ce que** les groupes terminaux du polymère essentiellement linéaire sont des groupes hydroxy, des groupes amino, des groupes carboxy, des groupes anhydride d'acide carboxylique et/ou des groupes mercapto.

5. Procédé selon l'une quelconque des revendications 1 à 4, **caractérisé en ce que** le polymère réactif avec un isocyanate ou le mélange de polymères réactifs avec des isocyanates est une ou plusieurs substance(s) choisie(s) dans l'énumération suivante : polyesters, polyéthylène- ou polypropylèneglycols di- ou trifonctionnels, polytétrahydrofurannes et polyamides, ainsi que copolymères et copolymères séquencés.

6. Procédé selon l'une quelconque des revendications 1 à 5, **caractérisé en ce qu'**on utilise comme polymères réactifs avec des isocyanates des polyesterpolyols ayant une masse moléculaire moyenne en nombre comprise entre 400 et 25 000 g/mole, de préférence entre 1 000 et 10 000 g/mole, de façon particulièrement préférée entre 2 000 et 6 000 g/mole et/ou des polyoxyalkylènes ayant une masse moléculaire moyenne en nombre comprise entre 250 et 12 000 g/mole, de préférence entre 500 et 4 000 g/mole.

7. Procédé selon l'une quelconque des revendications 1 à 4, **caractérisé en ce que** le polyisocyanate ayant une masse moléculaire < 500 est une substance ou un mélange de substances choisies parmi des polyisocyanates aromatiques, aliphatiques ou cycloaliphatiques ayant une fonctionnalité isocyanate comprise entre 1 et 3, de préférence ayant une fonctionnalité isocyanate de 1,8 à 2,2, de façon particulièrement préférée ayant la fonctionnalité isocyanate 2.

8. Procédé selon la revendication 7, **caractérisé en ce que** le polyisocyanate ayant une masse moléculaire < 500 est choisi dans le groupe des diisocyanatodiphénylméthanes (MDI), en particulier le 4,4'-diisocyanatodiphénylméthane et le 2,4'-diisocyanatodiphénylméthane ainsi que des mélanges de divers diisocyanatodiphénylméthanes ; le 4,4'-MDI [bis(4-isocyanatocyclohexyl)méthane] hydrogéné et le 2,4'-MDI hydrogéné ; le tétraméthylxylylènediisocyanate (TMXDI) ; le xylylène-diisocyanate (XDI) ; le 1.5-diisocyanatonaphtalène (NDI) ; des diisocyanatotoluènes (TDI), en particulier le 2,4-diisocyanatotoluène, ainsi que la TDI-urétdione, en particulier le 1-méthyl-2,4-phénylène-diisocyanate dimère (TDI-U), et les TDI-urées ; le 1-isocyanato-3-isocyanatométhyl-3,5,5-triméthylcyclohexane (IPDI) et ses isomères et dérivés, en particulier le dimère, le trimère et les polymères, ainsi que l'IPDI-isocyanurate (IPDI-T) ; le 3,3'-diméthylbiphényl-4,4'-diisocyanate (TODI) ; la 3,3'-diisocyanato-4,4'-diméthyl-N,N'-diphénylurée (TDIH) ; l'hexaméthylène-1,6-diisocyanate (HDI).

9. Procédé selon la revendication 8, **caractérisé en ce que** le polyisocyanate est le 2,4'-diisocyanatodiphénylméthane (2,4'-MDI) ayant une teneur maximale en la somme de 2,2'-diisocyanatodiphénylméthane (2,2'-MDI) et 4,4'-diisocyanatodiphénylméthane (4,4'-MDI) de 2,5 % en poids, par rapport au poids total du polyisocyanate.

10. Procédé selon l'une quelconque des revendications 1 à 9, **caractérisé en ce que** le prépolymère à terminaison isocyanate, à teneur réduite en monomères, pour l'utilisation dans la deuxième étape du procédé, contient une ou plusieurs substance(s) choisie(s) parmi les produits de réaction de polyéthers, en particulier des' polypropylèneglycols avec des polyisocyanates, en particulier les diisocyanatodiphénylméthanes (MDI), les diisocyanatotoluènes (TDI), le diisocyanatohexane (HDI) et/ou l'isocyanato-3-isocyanatométhyl-3,5,5-triméthylcyclohexane (IPDI).

11. Procédé selon l'une quelconque des revendications 1 à 10, **caractérisé en ce que** la première étape et/ou la deuxième étape du procédé est/sont effectuée(s) à une température dans la plage de 80 à 140 °C, de préférence de 100 à 120 °C.

12. Composition de polyuréthanne réactive, pouvant être obtenue conformément à un procédé selon l'une quelconque des revendications 1 à 11.

13. Composition de polyuréthanne réactive selon la revendication 12, **caractérisée en ce que** la composition de polyuréthanne contient des composants non réactifs qui sont choisis en particulier dans le groupe des polymères non réactifs, des résines rendant collant, des cires, des charges, des plastifiants, des additifs, des promoteurs d'adhérence, des pigments, des catalyseurs, des stabilisants et/ou des solvants.

14. Composition de polyuréthane réactive selon la revendication 13, **caractérisée en ce que** les polymères non réactifs sont choisis dans le groupe suivant : polyoléfines, polyacrylates ou polymères à base d'éthylène et d'acétate de vinyle.

15. Utilisation d'une composition de polyuréthane réactive selon la revendication 14, en tant qu'adhésif réactif monocomposant ou en tant que matière de revêtement.
